# EUROPEAN PATENT APPLICATION

(11) **EP 0 830 004 A2**
(43) Date of publication of application: **18.03.1998**
(21) Application number: 97115787.0
(22) Date of filing: 11.09.1997
(51) Int. Cl.: H04N 1/191, H04N 1/195, G02B 27/02, G03B 21/00

(54) **Apparatus for scanning slides**

(30) Priority: 16.09.1996 DE 19637628
(71) Applicant: EASTMAN KODAK COMPANY, Rochester, New York 14650 (US)
(72) Inventor: Fecher, Gerd, 70323 Stuttgart (DE); Gericke, Volker, 70323 Stuttgart (DE); Mutze, Ulrich, Dr., 70323 Stuttgart (DE)
(74) Representative: Reichert, Werner F., Dr. rer.nat., Dipl.-Phys.

(57) **Abstract**

The apparatus for scanning slides (6) comprises a slide projector (4) and an ancillary unit (24) adapted to be mounted in an opening (22) for a projection lens. By means of the ancillary unit, slides (6) are imaged in a focal plane in which a CCD sensor (8) is provided. The ancillary unit (24) is composed of a first imaging system (26) which images the slide (6) on a ground glass plate (27). Provided after the ground glass plate (27) is a second imaging system (28) which images the slide (6) image on the ground glass plate (27) on the CCD sensor (8).

## Description

The invention relates to an apparatus for scanning slides, said apparatus comprising a slide projector and an ancillary unit which is adapted to be mounted in an opening for a projection lens and serves for imaging a slide in a focal plane in which a CCD sensor is provided.

EP-B1-0 126 251 discloses a single-reflex camera with a slide projector to enable a slide to be photographed and duplicated with the projector. The slide inserted in a slide projector is illuminated by a lamp through a ground glass plate. Instead of the lens of the slide projector, an imaging device is placed in the path of the rays. A camera for picture taking can be attached at the front end of the lens. The slide can be focussed on the focal plane of the camera by way of an adjusting screw.

German Offenlegungsschrift DE-OS-27 30 494 likewise shows an apparatus for making copies of slides. The lens of a camera is coupled in a light-tight fashion to the slide projector. Provided within the slide projector is an imaging unit in which a diffusion disk is set.

An apparatus for scanning series of slides is disclosed in the periodical "Phototechnik International 6/94", page 104. For this purpose, a so-called scan projector is equipped with a camera having a CCD area sensor in the focal plane. The camera mounted on the scan projector is disclosed in DE-OS-44 23 425. The camera has an exchangeable lens and a filter system rotatably arranged in such a way that the individual filter elements can be brought over the CCD area sensor. By means of the scan projector provided with the camera, it is possible for whole series of slides to be scanned and archived.

The object of the present invention is to provide a scanning apparatus which can be used with conventional slide projectors without any modification measures. Furthermore, image formation that is uniform with respect to the intensity of illumination is to be attained by the apparatus.

According to the invention, this object is attained in that the ancillary unit has a first imaging system which images the slide on a ground glass plate, and that provided after the ground glass plate is a second imaging system which images the slide image on the ground glass plate on the CCD sensor.

Advantageously, the apparatus according to the invention is configured such that, instead of the usual projection lens, a scanning device can be set in the opening for the projection lens. The scanning device comprises a first imaging unit, a ground glass plate and a second imaging unit. The first imaging unit images the slide on the ground glass plate, and the second imaging unit finally images the image on the ground glass plate on a CCD sensor provided in the scanning device. Owing to this arrangement, an even illumination of the CCD sensor is attained, entailing an improvement in the picture quality. In addition, the scanning device can be attached to a commercial slide projector in a simple manner, without requiring any modification measures, thus producing an apparatus for scanning slides in a simple fashion.

The subject matter of the invention will be explained in more detail with reference to the description below in conjunction with the drawings, in which
- Fig. 1: is a schematic representation of the apparatus for scanning slides according to the prior art;
- Fig. 2: is a schematic representation of the apparatus according to the invention for scanning slides and
- Fig. 3: is a schematic representation of the apparatus together with a computer.

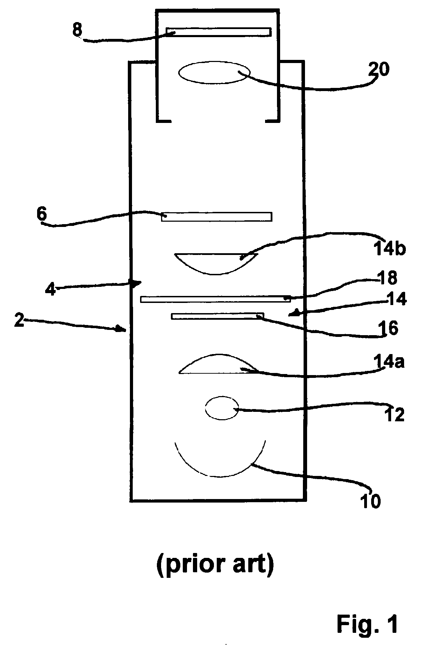

Prior art slide projectors (Fig. 1) use the optical system 4 present in a slide projector 2 for imaging the image of a slide 6 on a CCD sensor 8. The optical system 4 comprises a reflector 10 that directs the light of a lamp 12 to a condenser 14. The condenser 14 is composed of a first lens 14a and a second lens 14b. Provided between the first and the second lens 14a and 14b is an optical filter 16 (e.g. IR filter) and a ground glass plate 18. The ground glass plate 18 serves for a homogeneous illumination of the slide 6. A further lens 20 or an optical system is provided for imaging the slide 6 on the CCD sensor 8.

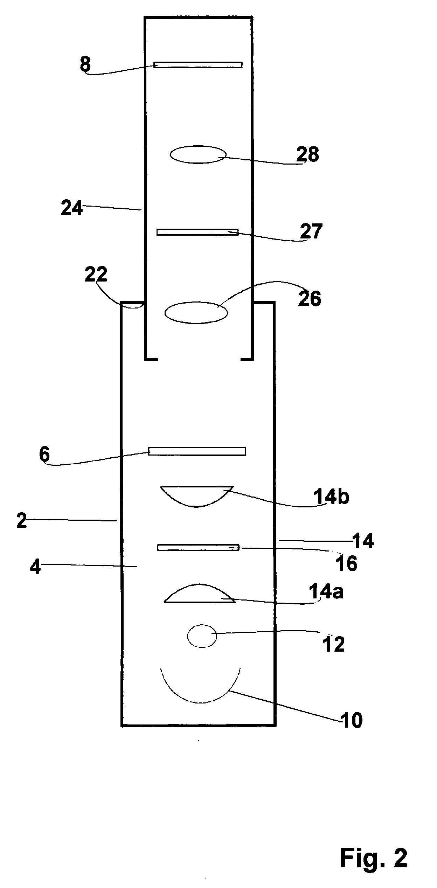

Fig. 2 shows the prior art depicted in Fig. 1 modified in accordance with the invention. The optical system 4 provided in the slide projector 2, such as reflector 10, lamp 12, condenser 14 and optical filter 16 for example, is used to illuminate the slide 6 to be imaged. The ground glass plate 18 between the first and the second lens 14a and 14b of the condenser 14 is removed. Mounted in an opening 22 for a projection lens (not shown) is an ancillary unit 24 composed of a first imaging lens 26 or a first imaging system 26, a ground glass plate 27 and a second imaging lens 28 or a second imaging system 28 and the CCD sensor 8. The ground glass plate 27 is devised with respect to its diffusion properties in such a way that it is possible for the image forming on the ground glass plate 27 to be imaged. The first imaging lens 26 forms the image of the slide on the ground glass plate 27. The second imaging lens 28 forms the image of the slide 6 on the CCD sensor 8. By means of the intermediate image on the ground glass plate 27 it is achieved that all light rays from all directions contribute to the intermediate image. Therefore even and good illumination of the CCD sensor 8 in the image plane is enabled.

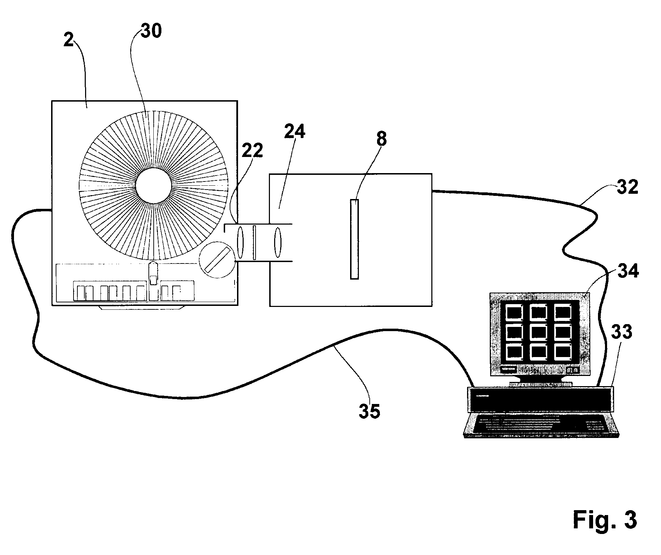

The use of the slide projector 2 provided with the ancillary unit 24 is depicted in Fig. 3. The slides to be scanned are stored in sequence in a magazine 30 of a conventional slide projector 2. In the embodiment shown here, a slide projector 2 with a carousel magazine is used. The slides to be scanned are put into the optical path of the slide projector 2, using the transport and slide changing means already provided in the slide projector 2.

The slide in the optical path is illuminated by the conventional illuminating device (see Fig. 2) of the slide projector 2. The projection lens of the slide projector 2 is removed. Mounted at the opening 22 for the projection lens is the ancillary unit 24 connected to a computer 33 via a first control line 32 for the ancillary unit 24.

The CCD sensor 8 in the ancillary unit 24 can take the form of a line sensor suitably traversable in the focal plane. Furthermore, the CCD sensor 8 can take the form of a CCD area sensor on which the entire slide 6 is imaged. The image information resulting from the illumination of the CCD sensor 8 is transmitted via the control line 32 to the computer 33. The scanned slides are displayed on a screen 34 of the computer 33.

The slide projector 2 can be connected to the computer 33 via a second control line 35. The computer 33 can therefore control the slide transport operation and the time necessary for sufficient exposure of the CCD sensor 8.

Suitable software is installed in the computer 33, enabling the scanned image data to be displayed on the screen 34 of the computer 33 and/or archived in a suitable data base.

Furthermore the CCD sensor 8 can be provided with a downstream video electronic system (not shown) permitting the scanned slides to be displayed directly on a monitor.

The invention was described with reference to a preferred embodiment, but it will be appreciated that it is within the capability of those skilled in the art to make modifications without departing from the scope of the claims set forth hereinafter.

## Claims

1. Apparatus for scanning slides (6), said apparatus comprising a slide projector (4) and an ancillary unit (24) which is adapted to be mounted in an opening (22) for a projection lens and serves for imaging a slide (6) in a focal plane in which a CCD sensor (8) is provided, characterized in that the ancillary unit (24) has a first imaging system (26) which images the slide (6) on a ground glass plate (27), and that provided after the ground glass plate (27) is a second imaging system (28) which images the slide (6) image on the ground glass plate on the CCD sensor.

2. Apparatus according to claim 1, characterized in that the ancillary unit (24) is adapted to be mounted in any slide projectors.

3. Apparatus according to claims 1 to 2, characterized in that the first and second imaging system (26, 28) in the ancillary unit (24) take the form of a first and second imaging lens.

4. Apparatus according to claims 1 to 3, characterized in that a computer (33) is provided by means of which the ancillary unit (24) is controllable via a first control line (32).

5. Apparatus according to claims 1 to 3, characterized in that the computer (33) is provided by means of which the ancillary unit (24) is controllable via the first control line (32) and the mode of operation of the slide projector (4) is controllable via a second control line (35).

6. Apparatus according to claims 4 or 5, characterized in that the computer (33) is provided with suitable software, enabling the scanned image data to be displayed on a screen (34) and archived in a data base.

7. Apparatus according to claim 1, characterized in that a video electronic system is connected to the CCD sensor (8), permitting the scanned slides to be displayed directly on a monitor.

8. Apparatus according to claim 1, characterized in that the ground glass plate (27) is devised with respect to its diffusion properties in such a way that it is possible for the image forming on the ground glass plate (27) to be imaged on the CCD sensor.

9. Apparatus according to any one of the preceding claims, characterized in that no ground glass plate is provided in the optical system of the slide projector (2).
